Europäisches Patentamt

European Patent Office

Office européen des brevets

(19)

(11) **EP 1 428 172 B1**

(12) **EUROPÄISCHE PATENTSCHRIFT**

(45) Veröffentlichungstag und Bekanntmachung des Hinweises auf die Patenterteilung:
**27.04.2005 Patentblatt 2005/17**

(21) Anmeldenummer: **02799411.0**

(22) Anmeldetag: **18.09.2002**

(51) Int Cl.⁷: **G06K 11/18**, G06K 11/20, G06F 3/033

(86) Internationale Anmeldenummer:
**PCT/EP2002/010478**

(87) Internationale Veröffentlichungsnummer:
**WO 2003/027943 (03.04.2003 Gazette 2003/14)**

(54) **AUSWAHL VON SOFTWARE- UND HARDWAREFUNKTIONEN MIT EINEM KRAFT-/MOMENTENSENSOR**

SELECTION OF SOFTWARE AND HARDWARE FUNCTIONS WITH A FORCE/TORQUE SENSOR

SELECTION DE FONCTIONS DE LOGICIEL ET DE MATERIEL AVEC UN CAPTEUR DE FORCE/COUPLE

(84) Benannte Vertragsstaaten:
**CH FR GB IT LI**

(30) Priorität: **21.09.2001 DE 10146470**

(43) Veröffentlichungstag der Anmeldung:
**16.06.2004 Patentblatt 2004/25**

(73) Patentinhaber: **3Dconnexion GmbH**
**82229 Seefeld (DE)**

(72) Erfinder:
• **GOMBERT, Bernd 3Dconnexion GmbH**
**82229 Seefeld (DE)**

• **VON PRITTWITZ, Bernhard 3Dconnexion GmbH**
**82229 Seefeld (DE)**

(74) Vertreter: **Rupp, Christian, Dipl.Phys.**
**Mitscherlich & Partner**
**Patent- und Rechtsanwälte**
**Sonnenstrasse 33**
**80331 München (DE)**

(56) Entgegenhaltungen:
| EP-A- 0 926 581 | DE-A- 19 937 307 |
| DE-A- 19 952 560 | US-A- 5 729 249 |

EP 1 428 172 B1

**Beschreibung**

Die vorliegende Erfindung bezieht sich auf ein Verfahren zur Steuerung von Hardware- und/oder Softwarefunktionen von Geräten, auf ein Verfahren zur Auswahl und Ansteuerung von Geräten mit Hardware- und/oder Softwarefunktionen, auf ein Computer-Softwareprogramm zur Ausführung eines dieser Verfahren, auf ein Eingabesystem zur Ansteuerung von Hardware- und/oder Softwarefunktionen angebundener Geräte, sowie auf ein Eingabesystem zur Auswahl und Ansteuerung von Geräten mit Hardware- und/oder Softwarefunktionen.

Kraft-/Momentensensoren, die Ausgangssignale bzgl. eines auf sie einwirkenden Kraft-/Momentenvektors und somit Ausgangssignale bzgl. verschiedener Freiheitsgrade (bspw. drei translatorische und drei rotatorische Freiheitsgrade) bereitstellen, sind aus dem Stand der Technik bekannt. Weitere Freiheitsgrade können durch Schalter, Drehrädchen etc. bereitgestellt werden.

Die DE 199 52 560 A1 ein Verfahren zum Ein- und/oder Verstellen eines Sitzes eines Kraftfahrzeugs unter Verwendung eines multifunktionalen, von Hand betätigten Eingabegerät mit Kraft-/Momentensensor. In Fig. 6 der DE 199 52 560 A1 ist ein solcher Kraft-/Momentensensor dargestellt. Insoweit wird daher bzgl. der technischen Einzelheiten eines solchen Sensors auf diese Figur und die zugehörige Beschreibung für die DE 199 52 560 verwiesen. Bei der DE 199 52 560 A1 weist das Eingabegerät eine Bedienoberfläche auf, auf der eine Anzahl von Bereichen zum Eingeben mindestens eines Druckimpulses vorgesehen sind. Das Eingabegerät weist eine Einrichtung zur Auswertung und Erkennung eines mittels des Kraft-/Momentensensors erfassten und in ein Kraft- und Momenten-Vektorpaar umgesetzten Druckimpulses auf. Nach derartiger Auswahl bspw. eines anzusteuernden Sitzes bzw. Sitzteiles eines Kraftfahrzeugs kann dann das ausgewählte Gerät mittels eines analogen Signals des Kraft-/Momentensensors linear angesteuert werden. Die Auswahl einer Funktion sowie die darauffolgende Ansteuerung sind also gemäß diesem Stand der Technik in zwei zeitlich voneinander getrennte Abläufe getrennt.

Aus der DE 199 37 307 A1 ist es bekannt, einen derartigen Kraft-Momenten-Sensor zum Steuern von Bedienelementen eines realen oder virtuellen Misch- bzw. Steuerpults zu verwenden, beispielsweise um neuartige Farb-, Licht- und/oder Tonkompositionen zu kreieren und zu gestalten. Hierbei kann in vorteilhafter Weise die intuitive räumliche Steuerung in drei translatorischen sowie drei rotatorischen Freiheitsgraden auf ein stufenloses räumliches Mischen oder Steuern einer großen Anzahl von optischen und/oder akustischen Parametern übertragen werden. Zur Steuerung wird auf die Bedienoberfläche des Eingabegeräts ein Druck ausgeübt und dadurch ein Impuls erzeugt, der mit Hilfe des Kraft-Momenten-Sensors erfasst und in ein aus einem Kraft- und einem Momentenvektor bestehendes Vektorpaar umgesetzt wird. Werden dabei bestimmte charakteristische Impulsvorgaben erfüllt, kann beispielsweise eine objektspezifische Steueroperation und/oder eine technische Funktion durch Schalten in einen Aktivierungszustand ausgelöst bzw. durch Schalten in einen Deaktivierungszustand wieder beendet werden.

Im Dokument US 5,729,249 ist ein Verfahren zur Steuerung von Hardware- und/oder Softwarefunktionen von Geräten beschrieben. Bei diesem Verfahren wird mittels einem kraftempfindlichen Matrixsensor ein Ausgangssignal erzeugt, wobei der Matrixsensor mit dem zu steuernden Gerät kommuniziert und in mehreren Freiheitsgraden manuell manipuliert werden kann. Dabei wird das Ausgangssignal mit einem vorgegebenen Charakteristikum, und zwar einem Schwellenwert für die Kraft, verglichen. Dieser Schwellenwert definiert dabei zwei Bereiche, ober- und unterhalb des Schwellenwertes. Die Interpretation der von dem Matrixsensor für verschiedene Freiheitsgrade aufgenommenen Positionssignale hängt dabei davon ab, ob der Kraft-Schwellenwert über- oder unterschritten ist. In einem ersten Fall werden die Signale der übrigen Freiheitsgrade als Positionierungsbefehle für das Gerät interpretiert und im anderen Fall als Rotations- bzw. Orientierungsbefehle.

Gemäß dem Stand der Technik ist es also allgemein vorgesehen, bei der Bedienung eines Kraft-/Momentensensors bzw. eines Eingabegeräts, das einen solchen Sensor aufweist, den Schritt der Auswahl des anzusteuernden Gerätes technisch und zeitlich strikt von der eigentlichen Ansteuerung zu trennen.

Angesichts des Standes der Technik ist es daher Aufgabe der vorliegenden Erfindung, die Ansteuerung von Geräten mit mehreren Funktionen bzw. von mehreren Geräten zu verbessern.

Zentraler Gedanke der Erfindung ist es dabei, dass die Auswahl eines Gerätes bzw. einer von mehreren Funktionen eines Gerätes nicht vorab gewählt werden muss, sondern vielmehr im Zuge der Einleitung einer Kraft bzw. eines Momentes in den Sensor erfolgt. Die eingeleiteten Kräfte bzw. Momente in jedem Freiheitsgrad des Sensors werden somit in dem Sinne nichtlinear ausgewertet, dass die Geräteund/oder Funktionsauswahl inhärent nicht proportional zu der erfassten Gerätebetätigung erfolgt. Dies entspricht einem Schalter, der wenigstens drei Stellungen aufweist, nämlich

    AUS/FUNKTION1/FUNKTION2 (Funktionsauswahl) bzw.

    AUS/GERÄT1/GERÄT2 (Geräteauswahl)

Da also erfindungsgemäß die Auswahl des Gerätes bzw. der Funktion mit der Ansteuerung kinematisch und zeitlich zusammenfällt, kann einerseits das Gerät selbst vereinfacht werden, da keine besonderen Einrichtungen zur Auswahl von Geräten bzw. Funktionen vorgesehen sein müssen. Darüber hinaus wird die Anwahl und Ansteuerung durch diese zeitliche Koinzidenz beschleunigt.

Im Gegensatz dazu kann gemäß der Lehre der DE 199 37 307 A1 bei Betätigung des Eingabegeräts jeweils nur eine Funktion ausgelöst werden, da nur geprüft wird, ob eine Vorgabe erfüllt ist oder nicht. Dies entspricht einem Schalter mit den zwei Stellungen AUS/FUNKTION

Eine Funktionsauswahl ist somit gemäß der DE 199 37 307 A1 nicht möglich.

Genauer gesagt wird die oben genannte Aufgabe durch die Merkmale der unabhängigen Ansprüche gelöst. Die abhängigen Ansprüche bilden den zentralen Gedanken der Erfindung in besonders vorteilhafter Weise weiter.

Gemäß einem ersten Aspekt der Erfindung ist ein Verfahren zur Steuerung von Hardware- und/oder Softwarefunktionen von Geräten vorgesehen. Dabei wird mittels eines in mehreren Freiheitsgraden manuell manipulierbaren Kraft-/Momentensensors ein bspw. analoges Ausgangssignal erzeugt. Der Kraft-/Momentensensor kann mit einem zu steuernden Gerät kommunizieren. Diese Kommunikation kann drahtgebunden oder auch drahtlos erfolgen. Das Ausgangssignal des Kraft-/Momentensensors wird mit mehreren Charakteristika, wie bspw. Schwellenwerten, verglichen. Diese Charakteristika definieren Bereiche. Für den Fall, dass gemäß der Auswertung das Ausgangssignal in einem ersten Bereich liegt, wird eine erste Funktion des Gerätes ausgelöst. Für den Fall, dass gemäß Auswertung das Ausgangssignal in einem zweiten Bereich liegt, wird eine weitere Funktion ausgelöst, die sich von der ersten Funktion unterscheidet.

Der Kraft-/Momentensensor kann Ausgangssignale bzgl. mehrerer, unterschiedlicher Freiheitsgrade (maximal drei translatorische und drei rotatorische Freiheitsgrade) zur Auswertung bereitstellen. In diesem Fall können für die verschiedenen Freiheitsgrade jeweils unterschiedliche, aber auch gleiche Charakteristika (Schwellenwerte etc.) für den Vergleich herbeigezogen werden.

Zustand sich das Gerät gerade befindet. Beispielsweise können bei der Ansteuerung von Softwarefunktionen berücksichtigt werden, welche Anwendung gerade auf dem Gerät (Computer) aktiv ist. Bei Hardwarefunktionen kann bspw. der Betriebszustand berücksichtigt werden.

Bei der Auswertung kann die zeitliche Entwicklung des Ausgangssignals berücksichtigt werden. Alternativ oder zusätzlich kann bei der Auswertung der aktuelle und insbesondere der absolute Wert des Ausgangssignals berücksichtigt werden.

Gemäß einem weiteren Aspekt der vorliegenden Erfindung ist ein Verfahren zur Steuerung von Hardware- und/oder Softwarefunktionen von Geräten vorgesehen. Dabei wird mittels eines Kraft-/Momentensensors ein Ausgangssignal erzeugt. Der Kraft-/Momentensensor kann mit dem zu steuernden Gerät kommunizieren. Dann wird eine von mehreren Funktionen des zu steuernden Gerätes ausgelöst, wobei die auszulösende Funktion abhängig von dem Ausgangssignal des Kraft-/Momentensensors in einem Freiheitsgrad ausgewählt wird.

Gemäß einem weiteren Aspekt der Erfindung ist das Verfahren zur Auswahl von Geräten mit Hardware- und/oder Softwarefunktionen vorgesehen. Dabei wird mittels eines Kraft-/Momentensensors ein Ausgangssignal erzeugt. Dann wird eines von mehreren Geräten, mit denen der Kraft-/Momentensensor kommunizieren kann, ausgewählt und angesteuert, wobei die Auswahl abhängig von dem Ausgangssignal des Kraft-/Momentensensors bzgl. eines Freiheitsgrades getroffen wird.

Gemäß einem weiteren Aspekt der vorliegenden Erfindung ist ein Computer-Softwareprogramm vorgesehen, das derart ausgeführt ist, dass es ein Verfahren wie oben ausgeführt implementiert, wenn es auf eine Computereinrichtung läuft.

Gemäß einem noch weiteren Aspekt der vorliegenden Erfindung ist ein Eingabesystem zur Ansteuerung von Hardware- und/oder Softwarefunktionen angebundener Geräte vorgesehen. Dabei dient ein Eingabegerät zur Erfassung von auf ein Bedienteil des Eingabegerätes einwirkenden Kräften und/oder Momenten. Einer geräte- und/oder eingabeseitigen Verarbeitungseinheit wird ein Ausgangssignal des Eingabegerätes zugeführt. Die Verarbeitungseinheit vergleicht das Ausgangssignal mit vorgegebenen Charakteristika (bspw. Schwellenwerten) und erzeugt ein Ansteuersignal, um eine erste Funktion des Gerätes für den Fall auszulösen, dass gemäß Auswertung des Ausgangssignals in einem ersten Bereich liegt, bzw. eine weitere Funktion des Gerätes für den Fall, dass gemäß Auswertung des Ausgangssignals in einem zweiten Bereich liegt. Die Bereiche werden durch die vorgegebenen Charakteristika abgegrenzt und definiert.

Die Verarbeitungseinheit kann von dem Eingabegerät Ausgangssignale bzgl. unterschiedlicher Freiheitsgrade erhalten.

Die Verarbeitungseinheit kann aus Ansteuersignalen kontextabhängig erzeugen, so dass berücksichtigt wird, in welchem Zustand sich das anzusteuernde Gerät gerade befindet.

Gemäß einem noch weiteren Aspekt der vorliegenden Erfindung ist ein Eingabesystem zur Ansteuerung von Hardware- und/oder Softwarefunktionen angeschlossene Geräte vorgesehen. Dabei dient ein Eingabegerät zur Erfassung von auf ein Bedienteil des Eingabegerätes einwirkenden Kräften und/oder Momenten. Eine geräte- und/oder eingabeseitige Verarbeitungseinheit erhält ein Ausgangssignal von dem Eingabegerät und bestimmt abhängig von dem Ausgangssignal bzgl. eines Freiheitsgrades des Eingabegerätes eine von mehreren Funktionen eines anzusteuernden Gerätes.

Gemäß einem noch weiteren Aspekt der vorliegenden Erfindung ist ein Eingabesystem zur Auswahl und Ansteuerung von Geräten mit Hardware- und/oder Softwarefunktionen vorgesehen. Ein Eingabegerät erfasst dabei Kräfte und/oder Momente, die auf ein Bedienteil des Eingabegerätes einwirken. Eine geräte- und/oder eingabeseitige Verarbeitungseinheit erhält ein Ausgangssignal von dem Eingabegerät und wählt abhängig von dem Ausgangssignal eines Freiheitsgrades des Eingabegerätes eines von mehreren Geräten aus.

Weitere Merkmale, Vorteile, und Eigenschaften der vorliegenden Erfindung werden aus der folgenden detaillierten Beschreibung von Ausführungsbeispielen und unter Zuhilfenahme der Figuren der beiliegenden Zeichnungen näher ersichtlich.

Fig. 1      zeigt schematisch den Ablauf einer erfindungsgemäßen Verarbeitung,

Fig. 2      zeigt ein Ausführungsbeispiel, bei der das Eingabegerät Softwarefunktionen auf einen Computer steuert,

Fig. 3      zeigt ein Ausführungsbeispiel, bei dem ein Eingabegerät drahtlos Gerätefunktionen beispielsweise eines CD-Players etc. ansteuert, und

Fig. 4      zeigt, wie auf Grundlage eines Kraft/Zeitprofils und vorgegebener Charakteristika gemäß der vorliegenden Erfindung Ereignisse ausgelöst werden können.

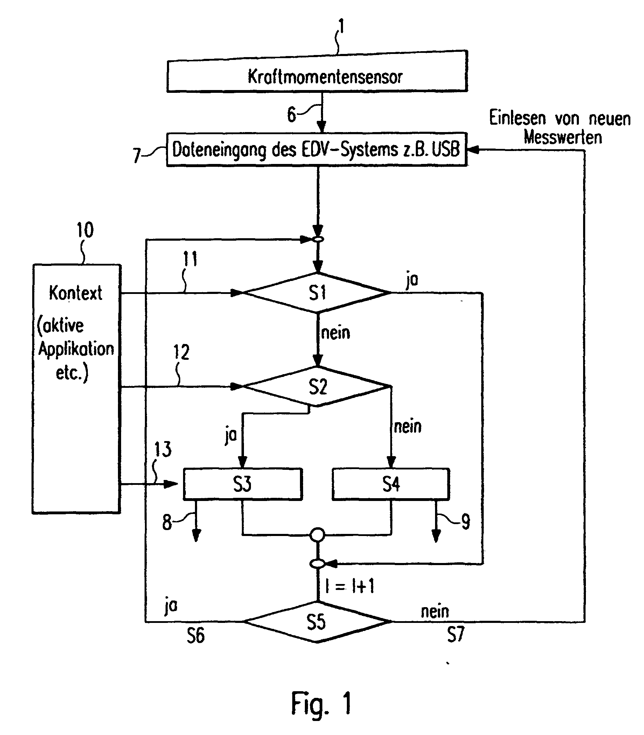

Unter Bezugnahme auf Fig. 1 soll zuerst der Ablauf der kraftgesteuerten Funktionsauslösung gemäß der vorliegenden Erfindung erläutert werden. Ein Kraft-/Momentensensor 1 erfasst Kräfte und Momente, die von einem Benutzer in jedem Freiheitsgrad des Kraft-/Momentensensors 1 eingeleitet werden. Der Kraft-/Momentensensor 1 gibt dann allgemein analoge Ausgangssignale 6 aus, die die eingeleiteten Kräfte und Momente wiedergeben. Genauer gesagt werden mehrere Ausgangssignale 6 von dem Kraft-/Momentensensor 1 ausgegeben, die den Kraft-/Momentenvektor $\vec{f}$ wiedergeben, der wie folgt definiert ist:

$$\vec{f} = \begin{Bmatrix} F_x \\ F_y \\ F_z \\ M_x \\ M_y \\ M_z \end{Bmatrix}$$

$F_x$, $F_y$, $F_z$ geben dabei die in den drei translatorischen Freiheitsgraden eingeleiteten Kräfte wieder. $M_x$, $M_y$ und $M_z$ geben entsprechend die in den drei rotatorischen Freiheitsgraden eingeleiteten Momente wieder.

Diese Ausgangssignale 6 werden dann beispielsweise einem USB-Dateneingang 7 desjenigen Gerätes zugeführt, das mittels des Kraft-/Momentensensors 1 gesteuert werden soll. Auf Grundlage der zugeführten Ausgangssignale 6 vom Kraft-/Momentensensor 1 erfolgt dann eine Auswertung der Ausgangssignale 6, die nunmehr bezugnehmend auf die Schritte S1 bis S5 dargestellt werden soll.

Allgemein ist es so, dass in den Schritten S1 und S2 der Auswertung die zugeführten Ausgangssignale 6 bzgl. eines jeden der maximal sechs Freiheitsgrade $F_x$, $F_y$, $F_z$, $M_x$, $M_y$ und $M_z$ des Kraft-/Momentensensors 1 ausgewertet und dazu mit Schwellenwerten verglichen werden. Dabei kann wie im Folgenden näher erläutert werden wird, sowohl der absolute aktuelle Wert wie auch die zeitliche Entwicklung des Kraft-/Momentensensors bzgl. eines jeden Freiheitsgrades beurteilt werden. In dem Schritt S1 kann beispielsweise bestimmt werden, ob der durch das Ausgangssignal 6 wiedergegebene Kraft-/Momentenvektor $\vec{f}$ bezüglich des i-ten Freiheitsgrads die folgende Gleichung erfüllt:

$$(1a) \qquad \left| \frac{\langle \vec{f}, \vec{e_i} \rangle}{\partial t} \right| < \Delta A_i$$

Bei dieser Beurteilung wird also geprüft, ob der Absolutwert der zeitlichen Veränderung der Projektion des Kraft-/Momentenvektors $\vec{f}$ auf den Eigenvektor $\vec{e_i}$ des i-ten Freiheitsgrades kleiner ist als ein vorgegebener Schwellenwert $\Delta A_i$ für den entsprechenden i-ten Freiheitsgrad. i kann dabei von 1 bis maximal 6 laufen, da maximal drei translatorische und drei rotatorische Freiheitsgrade möglich sind.

Alternativ zu der Beurteilung der zeitlichen Entwicklung gemäß Gleichung la kann auch der Absolutwert des Kraft-/Momentenvektors bzgl. eines bestimmten Freiheitsgrades wie folgt beurteilt werden:

$$(1b) \qquad \left| \langle \vec{f}, \vec{e_i} \rangle \right| < \Delta A_i$$

Gemäß dieser Beurteilung wird der Absolutwert (Betrag) der Projektion des Kraft-/Momentenvektors $\vec{f}$ auf den Eigenvektor $\vec{e_i}$ des i-ten Freiheitsgrades mit dem jeweiligen Schwellenwert $\Delta A_i$ für diesen i-ten Freiheitsgrad verglichen.

Es sei angemerkt, dass der Absolutwert bzw. die zeitliche Entwicklung nur Beispiele für zeitabhängige Charakteristika sind, mit denen der Kraft-/Momentenvektor verglichen wird.

Falls die Entscheidung gemäß Gleichung (1a) oder (1b) negativ ausfallen sollte, ist die zeitliche Entwicklung des Kraft-/Momentenvektors $\vec{f}$ bzw. der Absolutwert des Kraft-/Momentenvektors $\vec{f}$ bzgl. eines Freiheitsgrades i so klein, dass keinerlei Auswahl- oder Steuervorgang ausgelöst wird. Bei einem Vergleich mit einem Schalter bedeutet dies, dass sich der Schalter sozusagen in Stellung 0 befindet.

Falls indessen die Gleichungen (1a) bzw. (1b) gemäß dem Vergleich in Schritt S1 nicht erfüllt sind, dass heißt entweder die zeitliche Entwicklung oder der Absolutwert des Kraft-/Momentenvektors $\vec{f}$ in dem entsprechenden Freiheitsgrad den ersten Schwellenwert $\Delta A_i$ des i-ten Freiheitsgrades überschreitet, wird in einem Schritt S2 geprüft, ob die zeitliche Entwicklung

$$(2a) \qquad \left| \frac{\partial \langle \vec{f}, \vec{e}_i \rangle}{\partial t} \right| < \Delta B_i$$

bzw. der Absolutwert des Kraft-/Momentenvektors $\vec{f}$ bzgl. des i-ten Freiheitsgrades

$$(2b) \qquad \left| \langle \vec{f}, \vec{e}_i \rangle \right| < \Delta B_i$$

kleiner oder größer als ein zweiter Schwellenwert $\Delta B_i$ sind, wobei

$$\Delta B_i > \Delta A_i \ .$$

Falls der Vergleich in Schritt S2 ein positives Ergebnis hat, das heißt die zeitliche Entwicklung bzw. der Absolutwert des Kraft-/Momentenvektors $\vec{f}$ bzgl. des i-ten Freiheitsgrades sich zwischen den beiden Schwellenwerten $\Delta A_i$ und $\Delta B_i$ befindet, wird in einem Schritt S3 ein Ansteuersignal 8 ausgegeben, dass eine erste Funktion (Funktion 1) eines angeschlossenen Gerätes auswählt. Dies kann beispielsweise eine Hardwarefunktion sein, so dass beispielsweise bei einem CD-Player die nächste Spur angesteuert wird. Im Falle einer Softwarefunktion kann beispielsweise bei einem Textverarbeitungsprogramm die pagedown Funktion ausgelöst werden.

Vorteilhaft kann es sein, wenn ein Schwellenwert mit einer Endlage (Anschlag) des Kraft-/Momentensensors 1 bezüglich einer Bewegungsrichtung zusammenfällt. In diesem Fall wird also ein Ereignis ausgelöst, wenn der Kraft-/Momentensensor 1 in dieser Bewegungsrichtung (jeder Freiheitsgrad hat zwei Bewegungsrichtungen) bis zum Anschlag gedrückt wird. Dieses Anschlagen vermittelt dem Benutzer vorteilhafterweise eine haptische Feedback-Information, die eine gezielte Ansteuerung des mit dem Anschlag gekoppelten Ereignisses erleichtert.

Im übrigen können die Schwellenwerte dem Benutzer allgemein haptisch vermittelt werden, indem bspw. beim Erreichen des Schwellenwerts dem Benutzer ein haptisches Feedback-Signal vermittelt wird. Dies kann bspw. ein erhöhter Widerstand ("Ripple") sein.

Falls die Überprüfung in Schritt S2 ergibt, dass die Gleichung 2a bzw. 2b nicht erfüllt ist und somit die zeitliche Entwicklung bzw. der Absolutwert des Kraft-/Momentenvektors in dem entsprechenden Freiheitsgrad e nicht nur den Schwellenwert $\Delta A_i$, sondern auch den höheren Schwellenwert $\Delta B_i$ überschreitet, wird ein anderes Ansteuersignal 9 ausgegeben. Während also das erste Ansteuersignal 8 einer zweiten Stellung eines Schalters entspricht, stellt dieses weitere Ansteuersignal 9 (bzw. jedes darüber entsprechend vorgesehene Ansteuersignal) eine dritte Stellung (bzw. weitere Stellung) des "Schalters" dar. Durch diese weitere Ansteuersignal 9 kann eine Software- bzw. Hardwarefunktion ausgelöst werden, die sich von derjenigen unterscheidet, die durch das erste Ansteuersignal 8 ausgelöst werden kann. Im Falle einer Hardwarefunktion kann dies bei einem CD-Player, beispielsweise dem schnellen Vorspulen (Engl. "fast forward") entsprechen. Im Falle einer Softwareanwendung wie beispielsweise einer Textverarbeitung kann dies einem "line down"-Ansteuerbefehl gleichkommen.

In einem weiteren Schritt S5 wird dann solange zu dem Schritt S1 zurückgegangen (Schritt S6), bis alle Freiheitsgrade des zugeführten, durch das Ausgangssignal 6 wiedergegebenen Kraft-/Momentenvektors $\vec{f}$ ausgewertet würden. In dem Schritt S5 wird also geprüft, ob die folgende Gleichung erfüllt ist:

$$i \leq i_{max} \ .$$

Falls diese Gleichung gemäß der Auswertung in Schritt S5 nicht zu einem positiven Ergebnis führt und somit bereits alle Freiheitsgrade eines Messwertsatzes ausgewertet wurden, geht die Verarbeitung in einem Schritt S7 zurück zum Einlesen eines Satzes neuer Messwerte, dass heißt eines Satzes von Ausgangssignalen 6, die einen neuen vollständigen Kraft-/Momentenvektor $\vec{f}$ wiedergeben. Andernfalls wird $i$ um eins inkrementiert und der nächste Freiheitsgrad ausgewertet.

Gemäß einem weiteren Aspekt der vorliegenden Erfindung ist die Auswertung in dem Schritt S1, bzw. S2, S3 und S4 kontextabhängig. Dazu wird eine Information bzgl. des Kontext 10 des anzusteuernden Gerätes der Verarbeitung zugeführt. Der Kontext kann dabei der Betriebszustand des anzusteuernden Gerätes, eine Information bzgl. einer gerade auf dem Gerät aktiven Softwareanwendung etc. sein. Abhängig von der Information bzgl. des Kontext 10 können entsprechende Informationen 11, 12 die Schwellenwerte $\Delta A_i$ bzw. $\Delta B_i$ in den Schritten S1 bzw. S2 eingestellt werden. Darüber hinaus kann durch Zuführen einer entsprechenden Information 13 auch die Art der Ansteuersignale 8, 9 abhängig von der Kontextinformation 10 verändert werden.

Es ist anzumerken, dass der Begriff des "Kontexts" gemäß der vorliegenden Erfindung sehr weit zu verstehen ist. Unter "Kontext" sind bspw. auch externe Parameter (Temperatur,...) zu verstehen, die erfasst werden, um bspw. auch Parameter des Kraft-/Momentensensors 1 (Sensitivität, Verstärkung, Kopplung,...) abhängig von Umgebungseinflüssen zu verändern.

Ein weiteres Beispiel für die Kontextabhängigkeit ist, dass vergangene Ereignisse beeinflussen können, wie welches Ereignis ausgewählt und angesteuert wird. Durch ein vergangenes Ereignis geht also der Ablauf in einen Zustand, der sozusagen die Vergangenheit dokumentiert. Dementsprechend kann ein Speicher vorgesehen sein, in dem der aktuelle Zustand des Ablaufs abgelegt ist. Bei der Auslösung eines folgenden Ereignisses kann dann anhand eines Abrufs des Zustands berücksichtigt werden, welche Ereignisse bereits in der Vergangenheit durch den Benutzer angesteuert wurden.

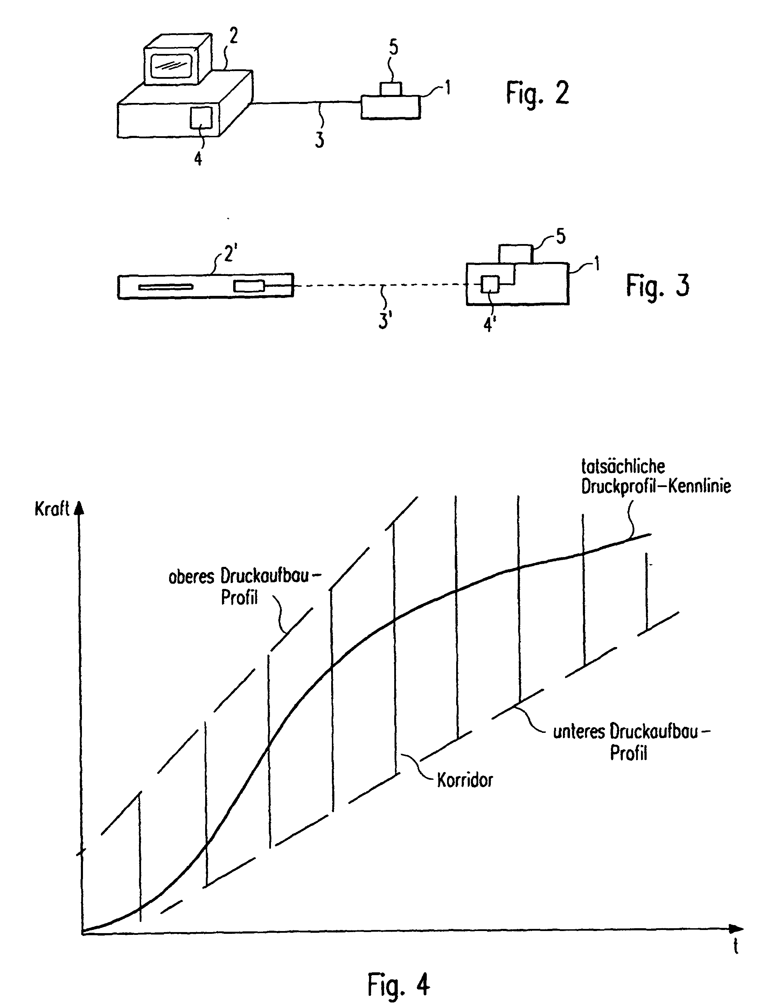

Bezugnehmend auf Fig. 2 und 3 sollen nunmehr zwei konkrete Ausführungsbeispiele der vorliegenden Erfindung erläutert werden.

In Fig. 2 ist ein Kraft-/Momentensensor 1 mit einem Bedienteil 5 vorgesehen. Auf das Bedienteil 5 kann der Benutzer Kräfte und Momente einleiten. In dem Ausführungsbeispiel von Fig. 2 ist der Kraft-/Momentensensor 1 in der Art einer "3D-Maus" fest mittels einer Leitung 3 mit einem Computer 2 verbunden. Der Computer 2 steht also in diesem Fall das anzusteuernde Gerät dar. In diesem Ausführungsbeispiel kann ein Prozessor 4 im Computer 2 die Ausgangssignale von dem Kraft-/Momentensensor 1 auswerten und dementsprechend, wie in Fig. 1 erläutert, Softwareund/oder Hardwarefunktionen des Computers 2 steuern.

Gemäß dem Ausführungsbeispiel von Fig. 3 ist in dem Kraft-/Momentensensor 1 mit dem Bedienteil 5 selbst ein Prozessor 4' vorgesehen, der die Ausgangssignale des Kraft-/Momentensensors 1 intern auswertet, so dass bereits Ansteuersignale vom dem Kraft-/ Momentensensor 1 ausgegeben werden. In dem Beispiel von Fig. 3 werden diese drahtlos (Luftschnittstelle 3') beispielsweise mittels des Bluetooth-Standards oder per Infrarot an einen CD-Player 2' übertragen. Der Kraft-/Momentensensor 1 hat also in diesem Fall die Funktion einer Fernbedienung, bei der durch entsprechendes Einleiten einer Kraft bzw. eines Momentes auf das Bedienteil 5 in einem Freiheitsgrad verschiedene Funktionen des CD-Players 2' schalterartig ausgelöst werden können.

Bezugnehmend auf Figur 4 soll nunmehr erläutert werden, wie der Kraft-/Momentensensor 1 abhängig von der Benutzung ein Kraft/Zeit-Profil erzeugt. Wenn diese Kraft/Zeit-Profil bestimmte Charakteristika erfüllt, stellt dies ein Ereignis zu einem bestimmten Zeitpunkt dar, das vorbestimmte Funktionen auslöst. Schwellenwerte sind also nur Spezialfälle für solche Charakteristika des Kraft/Zeit-Profils.

Wie in Figur 4 ersichtlich kann ein Charakteristikum auch sein, dass das Kraft/Zeit-Profil in einem vorbestimmten Korridor verläuft, der durch ein unteres und oberes Druckaufbau-Profil abgegrenzt ist. Diese Druckaufbau-Profile sind nur ein Beispiel dafür, dass die zeitliche Entwicklung des Kraftverlaufs und somit des Ansteuersignals mit Charakteristika abgeglichen werden kann, um abhängig davon Funktionen auszulösen. Ein Druckaufbau-Korridor wie in Figur 4 gezeigt lässt sich technisch bspw. durch eine Bandpassfilterung des Kraftverlaufs im Frequenzraums, d.h. nach einer Fourier-Transformation, implementieren. Die obere und untere Grenze des Korridors im Zeitraum werden dann durch die untere bzw. obere Grenze der Bandpassfilterung im Frequenzraum wiedergegeben.

Die Erfindung schafft somit mehrere Vorteile. Die Auswahl eines Gerätes bzw. einer von mehreren Funktionen eines Gerätes muss nicht vorab gewählt werden, sondern erfolgt vielmehr im Zuge der Einleitung einer Kraft bzw. eines Momentes in den Sensor. Die eingeleiteten Kräfte bzw. Momente in jedem Freiheitsgrad des Sensors werden dann ausgewertet. Erfindungsgemäß fällt die Auswahl des Gerätes bzw. der Funktion mit der Ansteuerung zusammen. Dadurch kann einerseits das Gerät selbst vereinfacht werden, da keine besonderen Einrichtungen zur Auswahl von Geräten bzw. Funktionen vorgesehen sein müssen. Darüber hinaus wird die Anwahl und Ansteuerung durch diese zeitliche Koinzidenz beschleunigt.

Im folgenden sollen kurz Beispiele für mögliche Anwendungen der vorliegenden Erfindung angeführt werden:

- Genannt wurde bereits die Ansteuerung von elektronischen oder elektrischen Geräten, wie bspw. einem CD-Player.

- Weiterhin wurde die Möglichkeit der Ansteuerung eines Anwendungsprogramms genannt, das auf einer Recheneinrichtung läuft, mit der das Eingabegerät kommuniziert. Die durch das Eingabegerät angesteuerten Funktionen können u.a. die Änderung diskreter Hierarchiestufen einer Verzeichnis-Baumstruktur oder von Unterverzeichnissen bei Erreichen vorgegebener Schwellenwerte des Eingabegeräts sein. Dabei findet also keine kontinuierliche (analoge) Pixelskalierung unter Anpassung der Schriftgrössen etc. statt, sondern diskrete Öffnungs- bzw. Schliessvorgänge weiterer Ebenen oder Detailstufen (bspw. bei Anwendung im Zusammenhang mit einem CAD-Programm) abhängig von der Manipulation des Eingabegeräts.

**Patentansprüche**

1. Verfahren zur Steuerung von Hardware- und/oder Softwarefunktionen von Geräten,
aufweisend die folgenden Schritte:

- Erzeugung eines Ausgangssignals (6) mittels eines Kraft-/Momentensensors (1), der mit dem zu steuernden Gerät (2, 2') kommuniziert (3, 3') und in mehreren Freiheitsgraden manuell manipuliert werden kann,

- Vergleich (4, 4') des Ausgangssignals (6) mit wenigstens einem vorgegebenen Charakteristikum, wobei das vorgegebene Charakteristikum Bereiche definiert,
- Auswählen und gleichzeitiges Ansteuern (8) einer ersten Funktion des Geräts (2, 2') allein dadurch , dass gemäß Auswertung der Wert des Ausgangssignals (6) bezüglich eines Freiheitsgrads des Kraft-/Momentensensors (1) in einem ersten Bereich ist und Auswählen und gleichzeitiges Ansteuern (9) einer weiteren Funktion allein dadurch , dass gemäß Auswertung der Wert des Ausgangssignals (6) bezüglich desselben Freiheitsgrads in einem zweiten Bereich ist.

2. Verfahren nach Anspruch 1,
   **dadurch gekennzeichnet,**
   **dass** der Kraft/Momentensensor (1) Ausgangssignale (6) bezüglich unterschiedlicher Freiheitsgrade zur Auswertung bereitstellt.

3. Verfahren nach Anspruch 1 oder 2,
   **dadurch gekennzeichnet,**
   **dass** die Auswertung des Ausgangssignals (6) kontextabhängig erfolgt, so dass berücksichtigt wird, in welchem Zustand sich das Gerät (2, 2') gerade befindet.

4. Verfahren nach Anspruch 3,
   **dadurch gekennzeichnet,**
   **dass** bei der Ansteuerung von Software-Funktionen berücksichtigt wird, welche Anwendung gerade auf dem Gerät (2, 2') aktiv ist.

5. Verfahren nach Anspruch 3,
   **dadurch gekennzeichnet,**
   **dass** bei der Auswertung des Ausgangssignals externe Parameter als Kontext berücksichtigt werden.

6. Verfahren nach Anspruch 3,
   **dadurch gekennzeichnet,**
   **dass** bei der Auswertung des Ausgangssignals zurückliegende Ereignisse als Zustandskontext berücksichtigt werden.

7. Verfahren nach einem der vorhergehenden Ansprüche,
   **dadurch gekennzeichnet,**
   **dass** bei der Auswertung die zeitliche Entwicklung des Ausgangssignals (6) berücksichtigt wird.

8. Verfahren nach einem der Ansprüche 1 bis 4,
   **dadurch gekennzeichnet,**
   **dass** bei der Auswertung der aktuelle Wert des Ausgangssignals (6) berücksichtigt wird.

9. Verfahren nach einem der vorhergehenden Ansprüche,
   **dadurch gekennzeichnet,**
   **dass** ein Schwellenwert mit einer Endlage des Kraft-/Momentensensors (1) in einer Bewegungsrichtung zusammenfällt.

10. Verfahren zur Auswahl und Ansteuerung von Geräten mit Hardware- und/oder Softwarefunktionen, aufweisend die folgenden Schritte:

    - Erzeugung eines Ausgangssignals (6) mittels eines Kraft-/Momentensensors (1), der mit mehreren Geräten (2, 2') kommunizieren (3, 3') kann und der in mehreren Freiheitsgraden manuell manipuliert werden kann,
    - Vergleich (4, 4') des Ausgangssignals (6) mit wenigstens einem vorgegebenen Charakteristikum, wobei das vorgegebene Charakteristikum Bereiche definiert, und
    - Auswählen von einem der Geräte und gleichzeitiges Ansteuern (8) einer Funktion des Geräts (2, 2') allein dadurch, dass gemäß Auswertung der Wert des Ausgangssignals (6) bezüglich eines Freiheitsgrads des Kraft-/Momentensensors (1) in einem ersten Bereich ist.

11. Computer-Softwareprogramm,
    **dadurch gekennzeichnet,**
    **dass** es ein Verfahren nach einem der vorhergehenden Ansprüche implementiert, wenn es durch einen Prozessor (4, 4') ausgeführt wird.

12. Eingabesystem zur Ansteuerung von Hardware- und/oder Softwarefunktionen angebundener Geräte (2, 2'), aufweisend

    - ein in mehreren Freiheitsgraden manuell manipulierbares Eingabegerät (1) zur Erfassung von auf ein Bedienteil (5) des Eingabegeräts (1) einwirkenden Kräften und/oder Momenten, und
    - eine geräte- und/oder eingabeseitige Verarbeitungseinheit (4, 4'), der ein Ausgangssignal (6) des Eingabegerätes (1) zuführbar ist und die dazu ausgelegt ist, das Ausgangssignal (6) mit vorgegebenen Charakteristika, die Bereiche definieren, zu vergleichen und gleichzeitig ein Ansteuersignal (8, 9) zu erzeugen, um eine erste Funktion des Geräts (2) allein dadurch auszuwählen und gleichzeitig anzusteuern, dass gemäß Auswertung der Wert des Ausgangssignals (6) bezüglich eines Freiheitsgrads des Kraft-/Momentensensors (1) in einem ersten Bereich ist und eine weitere Funktion des Geräts (2, 2') allein dadurch auszuwählen und gleichzeitig anzusteuern, dass gemäß Auswertung der Wert des Ausgangssignals (6) bezüglich desselben Freiheitsgrads des Kraft-/Momentensensors (1) in einem zweiten Bereich ist.

**13.** Eingabesystem nach Anspruch 12,
**dadurch gekennzeichnet,**
**dass** die Verarbeitungseinheit (4, 4') von dem Eingabegerät (1) Ausgangssignale (6) bezüglich unterschiedlicher Freiheitsgrade erhält.

**14.** Eingabesystem nach Anspruch 12 oder 13,
**dadurch gekennzeichnet,**
**dass** die Verarbeitungseinheit (4) das Ansteuersignal (8, 9) kontextabhängig erzeugt, so dass berücksichtigt wird, in welchem Zustand sich das Gerät gerade befindet.

**15.** Eingabesystem nach einem der Ansprüche 12 bis 14,
**dadurch gekennzeichnet,**
**dass** bei der Auswertung des Ausgangssignals (8, 9) externe Parameter als Kontext berücksichtigt werden.

**16.** Eingabesystem nach einem der Ansprüche 12 bis 15,
**dadurch gekennzeichnet,**
**dass** bei der Auswertung des Ausgangssignals (8, 9) zurückliegende Ereignisse als Zustands-Kontext berücksichtigt werden.

**17.** Eingabesystem nach einem der Ansprüche 12 bis 16,
**dadurch gekennzeichnet,**
**dass** ein Schwellenwert mit einer Endlage des Kraft-/Momentensensors (1) in einer Bewegungsrichtung zusammenfällt.

**18.** Eingabesystem zur Auswahl und Ansteuerung von Geräten (2, 2') mit Hardware- und/oder Softwarefunktionen, aufweisend

- ein in mehreren Freiheitsgraden manuell manipulierbares Eingabegerät (1) zur Erfassung von auf ein Bedienteil (5) des Eingabegeräts (1) einwirkenden Kräften und/oder Momenten, und
- eine geräte- und/oder eingabeseitige Verarbeitungseinheit (4, 4'), der ein Ausgangssignal (6) des Eingabegerätes (1) zuführbar ist und die dazu ausgelegt ist, das Ausgangssignal (6) mit vorgegebenen Charakteristika, die Bereiche definieren, zu vergleichen und gleichzeitig ein Ansteuersignal (8, 9) zu erzeugen, um eines der Geräte auszuwählen und gleichzeitig eine Funktion des ausgewählten Geräts anzusteuern allein dadurch, dass gemäß Auswertung der Wert des Ausgangssignals (6) bezüglich eines Freiheitsgrads des Kraft-/Momentensensors (1) in einem ersten Bereich ist.

**Claims**

**1.** Method of controlling hardware and/or software functions of devices,
having the following steps:

- generation of an output signal (6) by means of a force-moment sensor (1), which communicates (3, 3') with the device (2, 2') to be controlled, and can be manipulated manually in multiple degrees of freedom,
- comparison (4, 4') of the output signal (6) with at least one specified characteristic, the specified characteristic defining ranges,
- selection and simultaneous triggering (8) of a first function of the device (2, 2') only by, according to analysis, the value of the output signal (6) with respect to one degree of freedom of the force-moment sensor (1) being in a first range, and selection and simultaneous triggering (9) of a further function only by, according to analysis, the value of the output signal (6) with respect to the same degree of freedom being in a second range.

**2.** Method according to Claim 1,
**characterized in that**
the force-moment sensor (1) provides output signals (6) with respect to different degrees of freedom for analysis.

**3.** Method according to Claim 1 or 2,
**characterized in that**
the analysis of the output signal (6) is context-dependent, to take account of the state in which the device (2, 2') currently is.

**4.** Method according to Claim 3,
**characterized in that**
the driving of software functions takes account of which application is currently active on the device (2, 2').

**5.** Method according to Claim 3,
**characterized in that**
external parameters are taken into account as context in the analysis of the output signal.

**6.** Method according to Claim 3,
**characterized in that**
past events are taken into account as state context in the analysis of the output signal.

**7.** Method according to one of the preceding claims,
**characterized in that**
the development of the output signal (6) over time is taken into account in the analysis.

**8.** Method according to one of Claims 1 to 4, **characterized in that** the current value of the output signal (6) is taken into account in the analysis.

**9.** Method according to one of the preceding claims, **characterized in that** a threshold value coincides with a final position of the force-moment sensor (1) in one direction of motion.

**10.** Method of selecting devices with hardware and/or software functions, having the following steps:

- generation of an output signal (6) by means of a force-moment sensor (1), which can communicate (3, 3') with multiple devices (2, 2'), and can be manipulated manually in multiple degrees of freedom,
- comparison (4, 4') of the output signal (6) with at least one specified characteristic, the specified characteristic defining ranges, and
- selection of one of the devices, and simultaneous triggering (8) of a function of the device (2, 2') only by, according to analysis, the value of the output signal (6) with respect to one degree of freedom of the force-moment sensor (1) being in a first range.

**11.** Computer software program, **characterized in that** it implements a method according to one of the preceding claims if it is executed by a processor (4, 4').

**12.** Input system for driving hardware and/or software functions of connected devices (2, 2'), having

- an input device (1) which can be manipulated in multiple degrees of freedom, to capture forces and/or moments which act on an operating part (5) of the input device (1), and
- a device-side and/or input-side processing unit (4, 4'), to which an output signal (6) of the input device (1) can be fed, and which is designed to compare the output signal (6) with specified characteristics which define ranges, and simultaneously to generate a driving signal (8, 9) to select and simultaneously trigger a first function of the device (2) only by, according to analysis, the value of the output signal (6) with respect to one degree of freedom of the force-moment sensor (1) being in a first range, and to select and simultaneously trigger a further function of the device (2, 2') only by, according to analysis, the value of the output signal (6) with respect to the same degree of freedom of the force/moment sensor (1) being in a second range.

**13.** Input system according to Claim 12, **characterized in that** the processing unit (4, 4') receives output signals (6) concerning different degrees of freedom from the input device (1).

**14.** Input system according to Claim 12 or 13, **characterized in that** the processing unit (4) generates the driving signal (8, 9) depending on context, to take account of the state in which the device currently is.

**15.** Input system according to one of Claims 12 to 14, **characterized in that** external parameters are taken into account as context in the analysis of the output signal (8, 9).

**16.** Input system according to one of Claims 12 to 15, **characterized in that** past events are taken into account as state context in the analysis of the output signal (8, 9).

**17.** Input system according to one of Claims 12 to 16, **characterized in that** a threshold value coincides with a final position of the force-moment sensor (1) in one direction of motion.

**18.** Input system for selecting and driving devices (2, 2') with hardware and/or software functions, having

- an input device (1), which can be manipulated in multiple degrees of freedom, to capture forces and/or moments which act on an operating part (5) of the input device (1), and
- a device-side and/or input-side processing unit (4, 4'), to which an output signal (6) of the input device (1) can be fed, and which is designed to compare the output signal with specified characteristics which define ranges, and simultaneously to generate a driving signal (8, 9) to select one of the devices, and simultaneously to trigger a function of the selected device only by, according to analysis, the value of the output signal (6) with respect to one degree of freedom of the force-moment sensor (1) being in a first range.

**Revendications**

**1.** Procédé de commande de fonctions de matériel et/ou de logiciel d'appareils, lequel procédé comporte les étapes suivantes :

- la génération d'un signal de sortie (6) au moyen d'un capteur de force/couple (1) qui communique (3, 3') avec l'appareil à commander (2, 2') et qui peut être manipulé manuellement dans plusieurs degrés de liberté,

- la comparaison (4, 4') du signal de sortie (6) avec au moins une caractéristique prédéterminée, la caractéristique prédéterminée définissant des domaines,
- la sélection et la commande simultanée (8) d'une première fonction de l'appareil (2, 2') seulement lorsque, suivant l'exploitation, la valeur du signal de sortie (6) se trouve dans un premier domaine pour un degré de liberté du capteur de force/couple (1) et la sélection et la commande simultanée (9) d'une autre fonction seulement lorsque, suivant l'exploitation, la valeur du signal de sortie (6) se trouve dans un deuxième domaine pour le même degré de liberté.

2. Procédé selon la revendication 1, **caractérisé en ce que** le capteur de force/couple (1) délivre des signaux de sortie (6) pour différents degrés de liberté en vue de l'exploitation.

3. Procédé selon la revendication 1 ou 2, **caractérisé en ce que** l'exploitation du signal de sortie (6) est effectuée en fonction du contexte de sorte que l'on tienne compte de l'état dans lequel se trouve actuellement l'appareil (2, 2').

4. Procédé selon la revendication 3, **caractérisé en ce que**, lors de la commande de fonctions de logiciel, on tient compte de l'application qui est actuellement active sur l'appareil (2, 2').

5. Procédé selon la revendication 3, **caractérisé en ce que**, lors de l'exploitation du signal de sortie, on prend en compte des paramètres externes comme contexte.

6. Procédé selon la revendication 3, **caractérisé en ce que**, lors de l'exploitation du signal de sortie, on prend en compte des événements précédents comme contexte d'état.

7. Procédé selon l'une des revendications précédentes, **caractérisé en ce que**, lors de l'exploitation, on prend en compte le développement dans le temps du signal de sortie (6).

8. Procédé selon l'une des revendications 1 à 4, **caractérisé en ce que**, lors de l'exploitation, on prend en compte la valeur actuelle du signal de sortie (6).

9. Procédé selon l'une des revendications précédentes, **caractérisé en ce qu'**une valeur de seuil coïncide avec une position finale du capteur de force/couple (1) dans une direction de déplacement.

10. Procédé de sélection et de commande d'appareils avec des fonctions de logiciels et/ou de matériel, lequel procédé comporte les étapes suivantes :

- la génération d'un signal de sortie (6) au moyen d'un capteur de force/couple (1) qui peut communiquer (3, 3') avec plusieurs appareils (2, 2') et qui peut être manipulé manuellement dans plusieurs degrés de liberté,
- la comparaison (4, 4') du signal de sortie (6) avec au moins une caractéristique prédéterminée, la caractéristique prédéterminée définissant des domaines, et
- la sélection de l'un des appareils et la commande simultanée (8) d'une fonction de l'appareil (2, 2') seulement lorsque, suivant l'exploitation, la valeur du signal de sortie (6) se trouve dans un premier domaine pour un degré de liberté du capteur de force/couple (1).

11. Programme informatique, **caractérisé en ce qu'**il implémente un procédé selon l'une des revendications précédentes lorsqu'il est mis en oeuvre par un processeur (4, 4').

12. Système d'entrée pour commander des fonctions de matériel et/ou de logiciel liées à des appareils (2, 2'), lequel système comporte :

- un appareil d'entrée (1) qui peut être manipulé manuellement dans plusieurs degrés de liberté et qui est destiné à mesurer des forces et/ou des couples agissant sur un élément de commande (5) de l'appareil d'entrée (1), et
- une unité de traitement (4, 4') du côté de l'appareil et/ou du côté de l'entrée, à laquelle peut être amené un signal de sortie (6) de l'appareil d'entrée (1) et qui est étudié pour comparer le signal de sortie (6) avec des caractéristiques prédéterminées qui définissent des domaines et pour générer en même temps un signal de commande (8, 9), pour sélectionner et commander simultanément une première fonction de l'appareil (2) seulement lorsque, suivant l'exploitation, la valeur du signal de sortie (6) se trouve dans un premier domaine pour un degré de liberté du capteur de force/couple (1) et pour sélectionner et commander en même temps une autre fonction de l'appareil (2, 2') seulement lorsque, suivant l'exploitation, la valeur du signal de sortie (6) se trouve dans un deuxième domaine pour le même degré de liberté du capteur de force/couple (1).

13. Système d'entrée selon la revendication 12, **caractérisé en ce que** l'unité de traitement (4, 4') obtient de l'appareil d'entrée (1) des signaux de sortie (6) pour différents degrés de liberté.

**14.** Système d'entrée selon la revendication 12 ou 13, **caractérisé en ce que** l'unité de traitement (4) génère le signal de commande (8, 9) en fonction du contexte de sorte qu'on prenne en compte l'état dans lequel se trouve actuellement l'appareil.

**15.** Système d'entrée selon l'une des revendications 12 à 14, **caractérisé en ce que**, lors de l'exploitation du signal de sortie (8, 9), on prend en compte des paramètres externes comme contexte.

**16.** Système d'entrée selon l'une des revendications 12 à 15, **caractérisé en ce que**, lors de l'exploitation du signal de sortie (8 ,9), on prend en compte des évènements précédents comme contexte d'état.

**17.** Système d'entrée selon l'une des revendications 12 à 16, **caractérisé en ce qu'**une valeur de seuil coïncide avec une position finale du capteur de force/couple (1) dans une direction de déplacement.

**18.** Système d'entrée pour la sélection et la commande d'appareils (2, 2') comportant des fonctions de matériel et/ou de logiciel, lequel système comporte :

un appareil d'entrée (1) qui est manipulable manuellement dans plusieurs degrés de liberté et qui est destiné à mesurer des forces et/ou des couples agissant sur un organe de commande (5) de l'appareil d'entrée (1), et
une unité de traitement (4, 4') du côté de l'appareil et/ou du côté de l'entrée à laquelle peut être amené un signal de sortie (6) de l'appareil d'entrée (1) et qui est étudié pour comparer le signal de sortie (6) avec des caractéristiques prédéterminées qui définissent des domaines et générer en même temps un signal de commande (8, 9) pour sélectionner l'un des appareils et commander simultanément une fonction de l'appareil sélectionné seulement lorsque, suivant l'exploitation, la valeur du signal de sortie (6) se trouve dans un premier domaine pour un degré de liberté du capteur de force/couple (1).

Fig. 1

Fig. 2

Fig. 3

Fig. 4